# EUROPEAN PATENT SPECIFICATION

(11) **EP 3 530 324 B1**
(45) Date of publication and mention of the grant of the patent: **25.11.2026**
(21) Application number: 17862233.8
(22) Date of filing: 12.10.2017
(51) Int. Cl.: B60L 3/00, A62C 3/07, A62C 3/16, A62C 35/10, B60L 58/24, B61C 3/02, H01M 10/0525, H01M 50/24, H01M 50/30, H01M 50/213, H02J 7/00

(54) **STORAGE BATTERY DEVICE FOR STORAGE-BATTERY ELECTRIC RAILCAR, AND STORAGE-BATTERY ELECTRIC RAILCAR**
SPEICHERBATTERIEVORRICHTUNG FÜR ELEKTROSCHIENENFAHRZEUG MIT AKKU SOWIE ELEKTROSCHIENENFAHRZEUG MIT AKKU
DISPOSITIF DE BATTERIE DE STOCKAGE POUR AUTORAIL ÉLECTRIQUE À BATTERIE DE STOCKAGE, ET AUTORAIL ÉLECTRIQUE À BATTERIE DE STOCKAGE

(30) Priority: 18.10.2016 JP 2016204432
(43) Date of publication of application: 28.08.2019
(73) Proprietor: Hitachi, Ltd., Tokyo 100-8280 (JP)
(72) Inventor: NAGAURA, Yasuhiro, Tokyo 100-8280 (JP); KANEKO, Takashi, Tokyo 100-8280 (JP); MATSUURA, Masahiro, Tokyo 100-8280 (JP); KASHIMURA, Toshihiko, Tokyo 100-8280 (JP)
(74) Representative: Mewburn Ellis LLP
(86) International application number: PCT/JP2017/037051
(87) International publication number: WO 2018/074325

(56) References cited:
- EP-A1- 3 050 595
- EP-A2- 2 755 275
- WO-A1-2014/034057
- WO-A1-2016/042783
- CN-A- 103 825 059
- JP-A- 2007 027 011
- JP-A- 2010 097 836
- JP-A- 2012 129 138
- JP-A- 2013 196 907
- JP-A- 2014 049 226
- JP-A- 2014 082 108
- JP-A- 2014 235 845
- JP-A- 2016 150 199
- US-A1- 2017 165 513

## Description

### Technical Field

The present invention relates to a storage battery device mounted on a storage-battery electric railcar.

### Background Art

As a power system for a storage-battery electric railcar, for example, there has been proposed a power system including a main conversion circuit connected to a secondary winding of a main transformer to supply driving power to a main motor, and a conversion circuit for an auxiliary machine connected to a tertiary winding of the main transformer to supply power to an auxiliary machine (see Patent Document 1). Further, as a power system for a storage-battery electric railcar in which a tertiary winding of a main transformer is eliminated, there has been proposed a power system that connects a storage battery via a bidirectional chopper and a stationary inverter that supplies power to an auxiliary machine at the same time to a DC stage of a main conversion circuit including a converter and an inverter (see Patent Document 2). The main conversion circuit is connected to a secondary winding of a main transformer to supply driving power to a main motor.

### Prior Art Literature

### Patent Literature

PTL 1: JP-A-2014-64397
PTL 2: JP-A-2014-64398
JP 2010 097836 A proposes a battery pack, electronic equipment using it as a power source, and a battery pack case. CN 103 825 059 Aproposes a thermal management and automatic fire-extinguishing system of vehicle battery. JP 2007 027011A proposes a power source device. EP 2755275 A proposes an apparatus for extinguishing a battery-pack fire.

### Summary of Invention

### Technical Problem

There is a need to improve upon known fire countermeasures of a storage battery device.

An object of the invention is to prevent ignition or extinguish a fire of a storage battery device mounted on the storage-battery electric railcar when the storage battery device is outside short-circuited, crushed, or the like.

### Solution to Problem

The invention relates to a storage battery device according to claim 1.

### Advantageous Effect

According to the invention, the main circuit storage battery box is divided into small areas, the pressure release mechanisms are provided respectively, and storage batteries are stored therein. Accordingly, even if ignitable gas is generated from a certain storage battery, pressure in a small area is immediately increased and the ignitable gas is discharged from the pressure releasing mechanisms (when the main circuit storage battery box is not divided into small areas, even if the ignitable gas is generated, pressure is not increased and the ignitable gas is not discharged from the pressure release mechanism, which leads to a fire).

Further, according to the invention, even when ignition occurs from the storage battery, fire can be extinguished in an area only since the storage battery is disposed in a small area of the automatic fire extinguishing mechanism. The fire does not spread into other areas.

Therefore, if a state associated with an abnormality of the storage battery device mounted on a storage-battery electric railcar is occurred, the state associated with the abnormality of the storage battery device can be prevented or recovered automatically.

### Brief Description of Drawings

[Fig. 1] Fig. 1 is a front view of a main part of a storage-battery electric railcar according to an embodiment.
[Fig. 2] Fig. 2 is an overall configuration diagram of a power system for the storage-battery electric railcar according to the embodiment.
[Fig. 3] Fig. 3 is a perspective view of a main circuit storage battery box according to the embodiment.
[Fig. 4] Fig. 4 is a perspective view of a storage battery unit according to the embodiment.
[Fig. 5] Fig. 5 is a perspective view of a storage battery module according to the embodiment.
[Fig. 6] Fig. 6 is configuration view of a main part of an automatic fire extinguishing mechanism according to the embodiment.
[Fig. 7] Fig. 7 is configuration view of a main part of a pressure release mechanism according to the embodiment.

### Description of Embodiments

An embodiment discloses a storage battery device which includes a main circuit storage battery box which is divided into a plurality of device chambers, a plurality of storage battery units which are respectively stored in the plurality of device chambers, and a plurality of pressure release mechanisms which are respectively installed in the plurality of device chambers. Each of the plurality of pressure release mechanisms discharges gas when gas is generated from the plurality of storage battery units.

In the embodiment, it is disclosed that the main circuit storage battery box includes a pressure release mechanism to discharge the gas in the main circuit storage battery box to the outside of the main circuit storage battery box.

In the embodiment, it is disclosed that the plurality of pressure release mechanisms are installed in a lower portion of the main circuit storage battery box.

In the embodiment, it is disclosed that the pressure release mechanism is a valve that discharges gas in the device chamber to outside when pressure of the device chamber exceeds a predetermined pressure.

Further, the embodiment discloses a storage battery device which includes a main circuit storage battery box which is divided into a plurality of device chambers, a plurality of storage battery units which are respectively stored in the plurality of device chambers, and a plurality of automatic fire extinguishing mechanisms which are respectively provided in the plurality of device chambers. The plurality of automatic fire extinguishing mechanisms respectively extinguishes fire when fire is generated in the plurality of storage battery units.

In the embodiment, it is disclosed that the main circuit storage battery box includes an automatic fire extinguishing mechanism which extinguishes the ignited storage battery unit.

In the embodiment, it is disclosed that the plurality of automatic fire extinguishing mechanisms are disposed in upper portions of the plurality of storage battery units stored in identical device chambers.

In the embodiment, it is disclosed that the plurality of automatic fire extinguishing mechanisms are installed on top plates of the device chambers.

In the embodiment, it is disclosed that the automatic fire extinguishing mechanism is a fire extinguishing liquid storage tube, at least a part of which melts and discharges fire extinguishing liquid when an ambient temperature of the automatic fire extinguishing mechanism exceeds a predetermined temperature.

In the embodiment, it is disclosed that the storage battery units include a plurality of storage batteries disposed inside an approximate frame body, and at least a part of a surface of a storage battery is exposed.

Hereinafter, the above and other novel features and effects of the invention will be described with reference to the drawings. The drawings are used exclusively for understanding of the invention and do not limit the scope of the claims.

### (Embodiment)

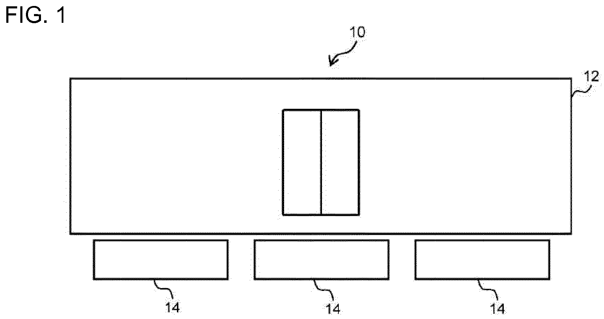

Fig. 1 is a front view of a main part of a storage-battery electric railcar according to the present embodiment. In Fig. 1, a plurality of main circuit storage battery boxes 14 are arranged in three banks below a vehicle body 12 of a storage-battery electric railcar 10. The main circuit storage battery boxes 14 serve as boxes which store a plurality of storage batteries (not shown), and the storage batteries serve as a DC power supply which supplies DC power to a DC circuit of a main convert device (not shown). The main convert device includes a converter, which converts AC power from a main transformer (not shown) connected to an overhead line into DC power, and an inverter which converts DC power output from the converter into three-phase AC power and outputs it to a main motor (induction motor for wheel driving) (not shown).

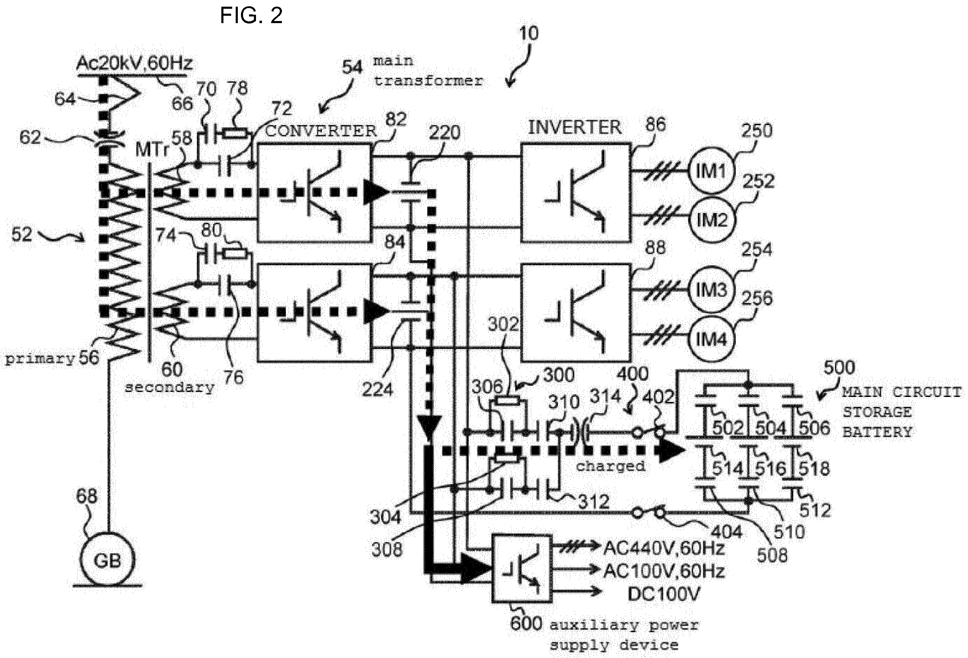

Fig. 2 is an overall configuration diagram of a power system for the storage-battery electric railcar according to the present embodiment. The power system for the storage-battery electric railcar includes a main transformer 52, a main convert device 54, a line breaker box 300, a disconnecting device 400, a main circuit storage battery 500, and an auxiliary power supply device 600. The main transformer 52 includes a primary winding 56 and a plurality of secondary windings 58 and 60. One end of the primary winding 56 is connected to an overhead line (AC 20 kV, 60 Hz) 66 through a vacuum circuit breaker (VCB) 62 and a pantograph 64, and the other end of the primary winding 56 is grounded via a ground brush 68 of a wheel. The secondary windings 58 and 60 are connected to the main convert device 54 respectively.

The main convert device 54 includes a plurality of contactors 70, 72, 74, and 76, resistors 78 and 80, converters 82 and 84, and inverters 86 and 88. At this time, the contactors 70 and 72 and the resistor 78 serve as a charging circuit, and the contactors 74 and 76 and the resistor 80 serve as a charging circuit. The contactors 70, 72, 74, and 76 are controlled to be on and off by a controller (not shown) which controls the converters 82 and 84 and the inverters 86 and 88. Further, the controller serves as a control unit and is, for example, a computer device including information processing resources such as a Central Processing Unit (CPU), a memory, and an input and output interface. Condensers 220 and 224 are connected to output sides of the converters 82 and 84.

The line breaker box 300 includes a plurality of resistors 302 and 304, and a plurality of contactors 306, 308, 310, 312 and 314. An input side of the line breaker box 300 (one end side of the resistors 302 and 304) is connected to a direct current circuit (DC stage) connecting the converters 82 and 84 and the inverters 86 and 88, and an output side thereof (one end side of the contactor 314) is connected to the main circuit storage battery 500 via the disconnecting device 400. The disconnecting device 400 includes a switch 402 and a switch 404. One end side of the switch 402 is connected to the contactor 314, and the other end side thereof is connected to a high potential side of the main circuit storage battery 500. One end side of the switch 404 is connected to a low potential side of the converter 84, and the other end side thereof is connected to a low potential side of the main circuit storage battery 500.

The main circuit storage battery 500 includes a plurality of contactors 502, 504, 506, 508, 510, and 512, and a plurality of storage batteries 514, 516, and 518. The auxiliary power supply device 600 supplies power to an auxiliary machine (air conditioning device, lighting device), and is formed of, for example, a static inverter that switches input DC voltage with a semiconductor element and smooths the switched voltage with a condenser or the like and outputs it as an AC voltage.

Here, at the time of an overhead wire running (power running), inverter consumption power and auxiliary consumption power are taken into the main convert device 54 from the overhead line 66 via the main transformer 52, main motors 250, 252, 254, and 256 are driven by the inverters 86 and 88, and output power of the converters 82 and 84 is supplied to an auxiliary machine via the auxiliary power supply device 600. At this time, power conversion operation of the inverters 86 and 88 and the converters 82 and 84 is executedby a controller, and the main circuit storage battery 500 can be charged by the output power of the converters 82 and 84.

During the overhead line running (regeneration), regenerative electric power (regenerative energy) from the main motors 250, 252, 254, and 256 is taken into the main convert device 54 via the inverters 86 and 88, the main circuit storage battery 500 is charged with the taken in regenerative electric power, and the taken in regenerative electric power is supplied to an auxiliary machine via the auxiliary power supply device 600. Upon completion of charging, the regenerative electric power is regenerated to the overhead line.

At the time of the overhead line running (coasting and stopping), auxiliary consumption power and storage battery charging power are taken into the main convert device 54 from the overhead line 66 via the main transformer 52, the main circuit storage battery 500 is charged by the output power of the converters 82 and 84, and the output power of the converters 82 and 84 is supplied to an auxiliary machine via the auxiliary power supply device 600. Upon completion of charging, operation of the converters 82 and 84 is stopped, and power is supplied from the main circuit storage battery 500 to the auxiliary machine via the auxiliary power supply device 600.

At the time of the storage battery running (power running), operation of the converters 82 and 84 is stopped, electric power from the main circuit storage battery 500 is taken into the main convert device 54, the main electric motors 250 to 256 are driven by the inverters 86 and 88, and the electric power from the main circuit storage battery 500 is supplied to an auxiliary machine via the auxiliary power supply device 600. At this time, power conversion operation of the inverters 86 and 88 is executed by the controller and power conversion operation of the converters 82 and 84 is stopped.

At the time of the storage battery running (regeneration), operation of the converters 82 and 84 is stopped, the regenerative electric power (regenerative energy) from the main motors 250 to 256 is taken into the main convert device 54 via the inverters 86 and 88, the main circuit storage battery 500 is charged with the taken in regenerative electric power, and the taken in regenerative electric power is supplied to the auxiliary machine via the auxiliary power supply device 600.

At the time of the storage battery running (coasting and stopping), operation of the converters 82 and 84 and the inverters 86 and 88 is stopped, and the electric power from the main circuit storage battery 500 is supplied to the auxiliary machine via the auxiliary power supply device 600.

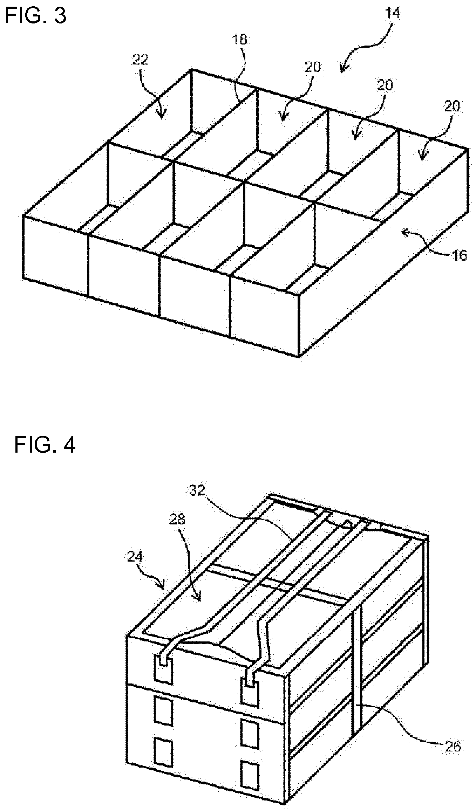

Fig. 3 is a perspective view of a main circuit storage battery box according to the present embodiment. In Fig. 3, the main circuit storage battery box 14 serves as a main component element of the storage battery device for the storage-battery electric railcar and is mainly formed of a metal box body 16. Inside of the box body 16 is separated into a plurality of (six) device chambers 20 and a plurality of fixture chambers 22 by a plurality of partition plates 18. As illustrated in Fig. 4, a storage battery unit 24 is stored in each of the device chambers 20. A fixture (neither is shown) such as a controller or a contactor is stored in each of the fixture chambers 22.

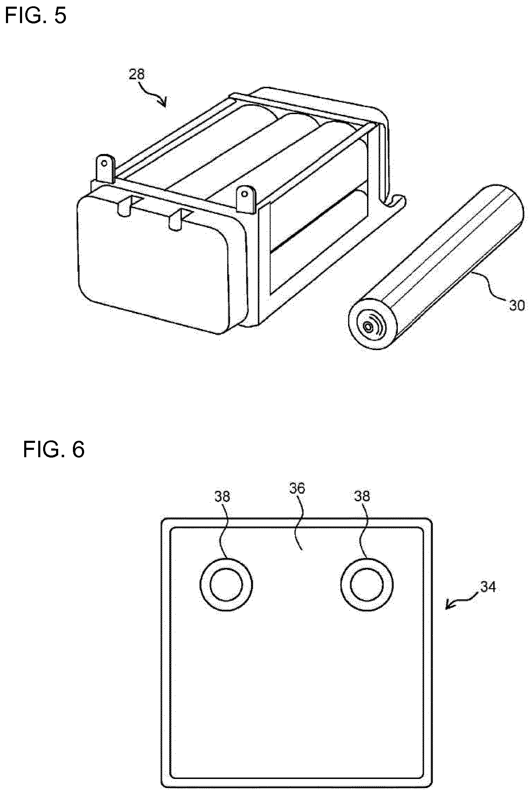

The storage battery unit 24 serves as a substantially rectangular parallelepiped frame by a plurality of metal frames 26 and the like. As illustrated in Fig. 5, twelve storage battery modules 28 are stored in the storage battery unit 24. The storage battery module 28 serves as a storage battery storing case that stores six storage batteries (cells) 30. The storage battery module 28 also serves as a substantially rectangular parallelepiped frame. At this time, the storage battery module 28, in which six storage batteries 30 are stored, is stored in twelve storage battery units 24, and accordingly 72 storage batteries 30 in total are stored in the storage battery units 24. Since the storage battery unit 24 and the storage battery module 28 both serve as frames, longitudinal surfaces of the stored storage batteries 30 are exposed. Further, the storage battery modules 28 stored in the storage battery unit 24 are connected in series with each other via conductor bars 32 (see Fig. 4), and the storage batteries 30 are connected in series with each other in the storage battery module 28. That is, the 72 storage batteries 30 in the storage battery units 24 are connected in series with each other. As the storage batteries 30, for example, a lithium ion battery can be used.

On an upper portion (top plate) of the storage battery unit 24 stored in each of the device chambers 20, a plurality of cooling fans 38 that cool the storage battery 30 that generates heat by charging and discharging and an automatic fire extinguishing mechanism 34 are arranged as shown in Fig. 6. The automatic fire extinguishing mechanism 34 includes a fire extinguishing liquid storage tube 36 that serves as a fire extinguishing liquid storage container or a fire extinguishing liquid storage unit, and fire extinguishing liquid (not shown) is stored in the fire extinguishing liquid storage tube 36. Since the automatic fire extinguishing mechanism 34 is disposed on the upper portion of the storage battery unit 24, when the storage battery 30 is ignited, ambient temperature of the automatic fire extinguishing mechanism 34 immediately rises due to an ascending air flow. The fire extinguishing liquid storage tube 36 is formed of a material that at least a part thereof melts and discharges fire extinguishing liquid when the ambient temperature exceeds a predetermined temperature. At this time, for example, when the storage battery 30 is short-circuited, collapsed due to external pressure or ignited and the ambient temperature exceeds the predetermined temperature, a part of the fire extinguishing liquid storage tube 36 melts so that the fire extinguishing liquid is discharged into the storage battery unit 24. The discharged fire extinguishing liquid naturally permeates a lower part of the storage battery unit 24 and covers the ignited storage battery 30 since the storage battery unit 24 is disposed in the lower part of the automatic fire extinguishing mechanism 34. Therefore, fire in the storage battery 30 in the storage battery unit 24 can be automatically and quickly extinguished even if any one of the storage batteries 30 is ignited, and safety of the storage battery unit 24 and the main circuit storage battery box 14 can be improved. Further, the fire extinguishing liquid storage tube 36 may discharge the fire extinguishing liquid based on the ambient temperature. For example, the fire extinguishing liquid storage tube 36 is provided with a valve that opens and closes according to the ambient temperature, and the valve is opened to release the fire extinguishing liquid when temperature of the fire extinguishing liquid in the fire extinguishing liquid storage tube 36 exceeds the predetermined temperature. Further, a fire extinguishing device that releases fire extinguishing liquid may be used instead of the fire extinguishing liquid storage tube 36 when temperature detected by a temperature sensor which detects the ambient temperature exceeds the predetermined temperature. In addition, a fire extinguishing device using fire extinguishing powder or fire extinguishing gas may also be used instead of the fire extinguishing liquid.

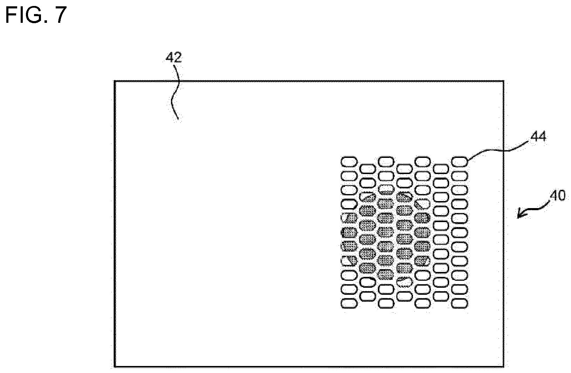

On the other hand, as illustrated in Fig. 7, a pressure release mechanism 40 is disposed at a bottom portion of the device chambers 20. The bottom portion of the device chambers 20 is a part (bottom portion) in the main circuit storage battery box 14 that faces a bottom portion of the storage battery unit 24. The pressure release mechanism 40 is disposed for each of the device chambers 20, and a plurality of openings 44 are formed in a bottom plate (cover) 42 of the lower portion of the device chamber 20 as one element of the pressure release mechanism 40. When pressure in the device chamber 20 exceeds a predetermined pressure with an abnormality of the storage battery 30, for example, the pressure release mechanism 40 can release gas in the device chamber 20 to outside of the device chamber 20. Although the released gas is at a high temperature, it is jetted downward from the openings 44 in the bottom plate of the device chamber 20. Therefore, the gas does not directly contact with a human body even if there is a person around the storage-battery electric railcar. Further, since the pressure release mechanism 40 is disposed at the bottom portion of the device chamber 20 so as to face the automatic fire extinguishing mechanism 40 with the storage battery 30 interposed therebetween, the fire extinguishing liquid discharged from the automatic fire extinguishing mechanism 40 is not discharged to the outside uselessly, and contributes to quick penetration of the fire extinguishing liquid to the bottom of the device chamber 20.

According to the present embodiment, a state associated with an abnormality of the storage battery 30 mounted on the storage-battery electric railcar 10 can be prevented from occurring automatically. That is, since the inside of the main circuit storage battery box 14 is separated into the plurality of device chambers 20 and the automatic fire extinguishing mechanism 34 is disposed in each of the device chambers 20, fire in the storage battery 30 in the storage battery unit 24 can be automatically and quickly extinguished even in case of ignition from any of the storage batteries 30. Even in the case of ignition, fire extinguishing agent is disposed in each small region in which the storage battery is arranged, and accordingly flames can be extinguished in only the region, and safety of the storage battery unit 24 and the main circuit storage battery box 14 can be enhanced. Further, by extinguishing necessary places only, the storage battery unit 24 that cannot be used with the fire extinguishing agent can be minimized, and an amount of fire extinguishing liquid (fire extinguishing agent) can also be reduced.

According to the present embodiment, since the inside of the main circuit storage battery box 14 is separated into the plurality of device chambers 20 and the pressure release mechanism 40 is disposed in each device chamber 20, pressure in each device chamber 20 become easily increased. When the pressure in each device chamber 20 exceeds the predetermined pressure, gas in each device chamber 20 can be quickly discharged to outside of each device chamber 20. For this reason, even if ignitable gas is generated from a certain storage battery, pressure in a small region immediately accumulates and is released from a valve (if it is not divided into small regions, the pressure does not increase even if the gas is generated, neither is released from the valve, which causes a fire). Therefore, the safety of the storage battery unit 24 and the main circuit storage battery box 14 can be improved.

### Reference Sign List

10 storage-battery electric railcar
12 vehicle body
14 main circuit storage battery box
20 device chamber
24 storage battery unit
28 storage battery module
30 storage battery
34 automatic fire extinguishing mechanism
36 fire extinguishing liquid storage tube
40 pressure release mechanism
52 main transformer
54 main convert device
82, 84 converter
86, 88 inverter
130, 196 power unit
204, 206 cooler
250, 252, 254, 256 main electric motor

## Claims

1. A storage battery device mounted below a vehicle body (12) of a storage-battery electric railcar (10), the storage battery device comprising:
a main circuit storage battery box (14) which is divided into a plurality of device chambers (20);
a plurality of storage battery units (24) which are respectively stored in the plurality of device chambers; and
a plurality of automatic fire extinguishing mechanisms (34) which are respectively disposed in the plurality of device chambers; wherein
the plurality of automatic fire extinguishing mechanisms respectively extinguish fire when fire is generated in the plurality of storage battery units, and the storage battery device is **characterised by**:
a plurality of pressure release mechanisms (40) which are respectively disposed in the plurality of device chambers,
the main circuit storage battery box is divided into the plurality of device chambers such that, in the case where gas is generated from a given storage battery unit in a corresponding device chamber, the pressure inside the corresponding device chamber immediately increases,
the plurality of pressure release mechanisms discharge gas from the respective device chambers when gas is generated from the corresponding plurality of storage battery units, and
the plurality of pressure release mechanisms (40) are disposed in a bottom portion of the main circuit storage battery box facing bottom portions of the storage battery units (24), each pressure release mechanism comprising a plurality of openings in a bottom plate of the respective device chamber such that the discharged gas is released in a downwards jet from the openings to the outside of the device chamber.

2. The storage battery device according to claim 1, wherein
the plurality of automatic fire extinguishing mechanisms (34) are disposed in upper portions of the plurality of storage battery units (24) stored in identical device chambers.

3. The storage battery device according to claim 1 or 2, wherein
the automatic fire extinguishing mechanism is a fire extinguishing liquid storage tube (36), at least a part of which melts and discharges fire extinguishing liquid when an ambient temperature of the automatic fire extinguishing mechanism exceeds a predetermined temperature.

4. The storage battery device according to any one of claims 1 to 3, wherein
the plurality of pressure release mechanisms are valves (40) that discharge gas in the device chambers to outside when pressure of the device chambers exceeds a predetermined pressure.

5. The storage battery device according to any one of claims 1 to 4, wherein
the storage battery units include a plurality of storage batteries disposed inside an approximate frame body, and at least a part of surface of the storage battery is exposed.

6. The storage battery device according to claim 5,
wherein
a storage battery of the plurality of storage batteries is a lithium ion battery.

7. A storage-battery electric railcar comprising the storage battery device according to any one of claims 1 to 6 and to which the storage battery device is mounted.

## Patentansprüche

1. Akkumulatorvorrichtung, die unter einem Wagenkasten (12) eines Akkumulator-Elektrotriebwagens (10) angebracht ist, wobei die Akkumulatorvorrichtung Folgendes umfasst:
einen Hauptstromkreis-Akkumulatorkasten (14), der in eine Vielzahl von Vorrichtungskammern (20) unterteilt ist;
eine Vielzahl von Akkumulatoreinheiten (24), die jeweils in der Vielzahl von Vorrichtungskammern untergebracht sind; und
eine Vielzahl von automatischen Feuerlöschmechanismen (34), die jeweils in der Vielzahl von Vorrichtungskammern angeordnet sind; wobei die Vielzahl von automatischen Feuerlöschmechanismen jeweils Feuer löschen, wenn in der Vielzahl von Akkumulatoreinheiten Feuer entsteht, und wobei die Akkumulatorvorrichtung durch Folgendes gekennzeichnet ist:
eine Vielzahl von Druckablassmechanismen (40), die jeweils in der Vielzahl von Vorrichtungskammern angeordnet sind,
wobei der Hauptstromkreis-Akkumulatorkasten in eine Vielzahl von Vorrichtungskammern unterteilt ist, sodass im Falle, dass Gas von einer bestimmten Akkumulatoreinheit in einer entsprechenden Vorrichtungskammer erzeugt wird, der Druck innerhalb der entsprechenden Vorrichtungskammer sofort ansteigt,
die Vielzahl von Druckablassmechanismen Gas aus den entsprechenden Vorrichtungskammern ablassen, wenn Gas von der entsprechenden Vielzahl von Akkumulatoreinheiten erzeugt wird, und
die Vielzahl von Druckablassmechanismen (40) in einem unteren Abschnitt des Hauptstromkreis-Akkumulatorkastens unteren Abschnitten der Akkumulatoreinheiten (24) zugewandt angeordnet ist, wobei jeder Druckablassmechanismus eine Vielzahl von Öffnungen in einer Bodenplatte der entsprechenden Vorrichtungskammer umfasst, sodass das abgelassene Gas durch die Öffnungen in einem nach unten gerichteten Strahl aus der Vorrichtungskammer nach außen abgelassen wird.

2. Akkumulatorvorrichtung nach Anspruch 1, wobei
die Vielzahl von automatischen Feuerlöschmechanismen (34) in oberen Abschnitten der Vielzahl von Akkumulatoreinheiten (24) angeordnet ist, die in identischen Vorrichtungskammern untergebracht sind.

3. Akkumulatorvorrichtung nach Anspruch 1 oder 2, wobei
der automatische Feuerlöschmechanismus ein Feuerlöschflüssigkeit-Speicherrohr (36) ist, von dem zumindest ein Teil schmilzt und Feuerlöschflüssigkeit freisetzt, wenn die Umgebungstemperatur des automatischen Feuerlöschmechanismus eine vorbestimmte Temperatur überschreitet.

4. Akkumulatorvorrichtung nach einem der Ansprüche 1 bis 3, wobei
die Vielzahl von Druckablassmechanismen Ventile (40) sind, die Gas in den Vorrichtungskammern nach außen ablassen, wenn der Druck der Vorrichtungskammern einen vorbestimmten Druck überschreitet.

5. Akkumulatorvorrichtung nach einem der Ansprüche 1 bis 4, wobei
die Akkumulatoreinheiten eine Vielzahl von Akkumulatoren umfassen, die innerhalb eines annähernden Rahmenkörpers angeordnet sind, und zumindest ein Teil der Oberfläche des Akkumulators freiliegt.

6. Akkumulatorvorrichtung nach Anspruch 5, wobei
ein Akkumulator der Vielzahl von Akkumulatoren ein Lithium-Ionen-Akkumulator ist.

7. Akkumulator-Elektrotriebwagen, der eine Akkumulatorvorrichtung nach einem der Ansprüche 1 bis 6 umfasst und an dem die Akkumulatorvorrichtung angebracht ist

## Revendications

1. Dispositif de batterie de stockage monté sous une carrosserie de véhicule (12) d'un wagon électrique à batterie de stockage (10), le dispositif de batterie de stockage comprenant :
un boîtier de batterie de stockage de circuit principal (14) qui est divisé en une pluralité de chambres de dispositif (20) ;
une pluralité d'unités de batterie de stockage (24) qui sont respectivement stockées dans la pluralité de chambres de dispositif ; et
une pluralité de mécanismes d'extinction d'incendie automatiques (34) qui sont disposés respectivement dans la pluralité de chambres de dispositif ; dans lequel la pluralité de mécanismes d'extinction d'incendie automatiques éteignent respectivement un incendie lorsqu'un incendie est généré dans la pluralité d'unités de batterie de stockage, et le dispositif de batterie de stockage est **caractérisé par** :
une pluralité de mécanismes de libération de pression (40) qui sont disposés respectivement dans la pluralité de chambres de dispositif,
le boîtier de batterie de stockage de circuit principal est divisé en la pluralité de chambres de dispositif de telle sorte que dans le cas dans lequel du gaz est généré à partir d'une unité de batterie de stockage donnée dans une chambre de dispositif correspondante, la pression à l'intérieur de la chambre de dispositif correspondante augmente immédiatement,
la pluralité de mécanismes de libération de pression décharge du gaz des chambres de dispositif respectives lorsque du gaz est généré à partir de la pluralité correspondante d'unités de batterie de stockage, et
la pluralité de mécanismes de libération de pression (40) sont disposés dans une partie inférieure du boîtier de batterie de stockage de circuit principal faisant face à des parties inférieures des unités de batterie de stockage (24), chaque mécanisme de libération de pression comprenant une pluralité d'ouvertures dans une plaque inférieure de la chambre de dispositif respective de telle sorte que le gaz déchargé soit libéré dans un jet vers le bas depuis les ouvertures vers l'extérieur de la chambre de dispositif.

2. Dispositif de batterie de stockage selon la revendication 1, dans lequel
la pluralité de mécanismes d'extinction d'incendie automatiques (34) est disposée dans des parties supérieures de la pluralité d'unités de batterie de stockage (24) stockées dans des chambres de dispositif identiques.

3. Dispositif de batterie de stockage selon la revendication 1 ou 2, dans lequel
le mécanisme d'extinction d'incendie automatique est un tube de stockage de liquide d'extinction d'incendie (36), dont au moins une partie fond et décharge du liquide d'extinction d'incendie lorsqu'une température ambiante du mécanisme d'extinction d'incendie automatique dépasse une température prédéterminée.

4. Dispositif de batterie de stockage selon l'une quelconque des revendications 1 à 3, dans lequel
la pluralité de mécanismes de libération de pression sont des vannes (40) qui déchargent du gaz dans les chambres de dispositif vers l'extérieur lorsque la pression des chambres de dispositif dépasse une pression prédéterminée.

5. Dispositif de batterie de stockage selon l'une quelconque des revendications 1 à 4, dans lequel
les unités de batterie de stockage comprennent une pluralité de batteries de stockage disposées à l'intérieur d'un corps de cadre approximatif, et au moins une partie de la surface de la batterie de stockage est exposée.

6. Dispositif de batterie de stockage selon la revendication 5, dans lequel
une batterie de stockage de la pluralité de batteries de stockage est une batterie au lithium-ion.

7. Véhicule ferroviaire électrique à batterie de stockage comprenant le dispositif de batterie de stockage selon l'une quelconque des revendications 1 à 6 et sur lequel le dispositif de batterie de stockage est monté.
